# EUROPÄISCHE PATENTSCHRIFT

(11) **EP 2 284 496 B1**
(45) Veröffentlichungstag und Bekanntmachung des Hinweises auf die Patenterteilung: **19.10.2011**
(21) Anmeldenummer: 09166798.0
(22) Anmeldetag: 30.07.2009
(51) Int. Cl.: G01D 3/08, G01J 1/44, G01J 1/18, G01J 3/28

(54) **Sensor und Verfahren**
Sensor and method
Capteur et procédé

(43) Veröffentlichungstag der Anmeldung: 16.02.2011
(73) Patentinhaber: SICK AG, 79183 Waldkirch (DE)
(72) Erfinder: Waslowski, Kai, 79312, Emmendingen (DE); Merettig, Gerhard, 79350, Sexau (DE); Auer, Patrick, 79106, Freiburg (DE)
(74) Vertreter: Ludewigt, Christoph

(56) Entgegenhaltungen:
- EP-A1- 2 083 209

## Beschreibung

Die Erfindung betrifft einen Sensor nach dem Oberbegriff des Anspruchs 1 und ein Verfahren zum Betreiben eines solchen Sensors nach dem Oberbegriff des Anspruchs 11.

Aus der EP 2 083 209 A1 ist ein kamerabasierter Sicherheitssensor mit einer Bildauswertung zum Personenschutz an gefahrbringenden Maschinen bekannt, mit dem fehlersicher Wege und Geschwindigkeiten durch optische Korrelation bestimmt werden können. Zur Erfüllung der Anforderungen in der Sicherheitstechnik ist im Rahmen der Bildauswertung ein Maß für die Güte der Auswertung bestimmbar. Dies geschieht, indem die Strukturen im Bild daraufhin ausgewertet werden, ob diese für eine sichere Bildauswertung mittels Korrelation ausreichend sind.

Gattungsgemäße Sensoren weisen eine üblicherweise als grüne Anzeige-LED ausgebildete Stabilitätsanzeige auf. Diese Anzeige soll bei ungenügender Signalreserve erlöschen und somit signalisieren, wie "stabil" der Sensor eingestellt ist. Beispiele für einen solchen Sensor sind die Lichtschranken und Lichttaster der EX-10 Serie der Firma Matsushita. In dieser Realisierung basiert die Stabilitätsanzeige auf einer reinen Schwellwertbewertung der vom Lichtempfänger empfangenen Lichtintensität. Die Schwellwertbewertung geht von der Annahme aus, dass wenn die aktuell gemessene Lichtintensität weit entfernt ist von der Lichtintensität, bei der der Sensor schalten und ein Objekterkennungssignal geben würde (Detektionsschwelle), die Detektion sicher ist. D.h., dass im Falle der EX-10 Serie die grüne Stabilitätsanzeige erlischt, wenn die Lichtintensität kleiner beispielsweise dem 1,15-fachen der Detektionsschwelle ist und größer als das 0,75-fache und ansonsten leuchtet.

Nachteilig ist, dass bei falscher Wahl der Stabilitäts-Schwelle, also der obigen Werte 1,15 und 0,75, entweder die Systemempfindlichkeit zu klein wird oder die Detektion unter Störungen von außen, wie beispielsweise durch Umgebungslicht oder durch andere Lichtschranken, nicht korrekt funktioniert. Die Stabilitätsschwellen sind festgelegt und somit nicht flexibel. Insbesondere kann es Störsignale geben, die trotz Vorhandensein zu einer Stabilitätsanzeige führen, die einen Zustand " stabil" signalisiert. Ein einfaches Beispiel für ein solches Störsignal wäre eine sinusförmige Schwingung mit großer Amplitude, so dass aufgrund der großen Amplitude sowohl das 1,15-fache der Detektionschwelle überschritten und das 0,75-fache der Detektionschwelle unterschritten wird. Dann kann es nämlich passieren, dass im zeitlichen Mittel die Stabilitätsbedingungen (Signal größer als 1,15 und kleiner 0,75) erfüllt sind und ein falsches Stabilitätssignal ausgegeben wird.

Ausgehend von diesem Stand der Technik ist es Aufgabe der Erfindung, einen verbesserten Sensor bereitzustellen, mit dem eine genauere Stabilitätsanzeige möglich ist und der auch unter Störeinflüssen korrekt arbeitet. Eine weitere Aufgabe ist es, ein entsprechendes, verbessertes Verfahren zur Bereitstellung eines Stabilitätssignals bereitzustellen.

Diese Aufgabe wird gelöst durch einen Sensor mit den Merkmalen des Anspruchs 1 und ein Verfahren mit den Merkmalen des Anspruchs 11.

Der erfindungsgemäße Sensor weist einen eine Messgröße erfassenden Empfänger, der in Abhängigkeit der von einem zu detektierenden Objekt beeinflussten Messgröße ein Empfangssignal bereitstellt, auf. Von einer Auswerteeinheit wird ein Objektfeststellungsignal in Abhängigkeit des Empfangssignals bereitgestellt. Das Empfangssignal wird einem ersten Detektionszweig zugeführt, der ein Filter aufweist, dessen Ausgangssignal mit einem Komparator gegen einen ersten Schwellwert verglichen wird. Erfindungsgemäß ist mindestens ein zweiter Detektionszweig parallel zum ersten vorgesehen, in dem ein zweiter Filter mit anderem Frequenzgang angeordnet ist, dessen Ausgangssignal gegen einen zweiten Schwellwert verglichen wird und in Abhängigkeit aller Vergleichsergebnisse ein Stabilitätssignal erzeugbar ist.

Somit durchläuft das Empfangssignal, das im Falle eines optoelektronischen Sensors ein Fotodiodenstrom ist, parallel zwei unterschiedliche Filter, welche unterschiedliche Frequenzgänge haben und somit die verschiedenen Frequenzen unterschiedlich filtern. Ein Filter kann einen ersten Frequenzbereich dämpfen, beispielsweise einen, in dem vermehrt Störsignale von Energiesparlampen auftreten und das andere Filter einen anderen Frequenzbereich, in dem vermehrt Störsignale von Handys, Personenrufanlagen, Schaltnetzteilen o. dgl. auftreten. Die Ausgangssignale der Filter werden getrennt bewertet, das heißt, jedes gegen einen Schwellwert verglichen, und verarbeitet. Solange beide Detektionszweige das identische Ergebnis liefern, liegt kein das Detektionsergebnis verfälschender Störer vor und die Stabilitätsanzeige erzeugt ein Signal, das diese Stabilität anzeigt, beispielsweise eine grün leuchtende LED. Liefert einer der Detektionszweige ein "falsches" bzw. abweichendes Ergebnis liegt ein Störsignal vor und die Stabilitätsanzeige kann dieses anzeigen, indem sie entweder erlischt oder in ihrer Helligkeit zumindest reduziert wird. Daneben bleibt die eigentliche Funktion der Objektfeststellung durch den Sensor erhalten.

Mit der Erfindung lässt sich die Stabilitätschwelle sehr nahe an die Detektionschwelle des Sensors bringen, wie dies im Einzelnen in dem detaillierten Ausführungsbeispiel beschrieben ist. Das bedeutet, dass der Bereich des Sensors, indem dieser stabil arbeitet, vergrößert ist und dies auch korrekt angezeigt wird. Der Sensor ist in einem größeren Bereich "grün" (Stabilitätssignal "high") und arbeitet dort zuverlässig.

Mit besonderem Vorteil wird unabhängig von der Störquelle ein den tatsächlichen Verhältnissen entsprechendes Stabilitätssignal ausgegeben, was bisher nicht möglich war. Insbesondere kann nicht mehr die oben zum Stand der Technik beschriebene Situation eintreten, dass das Stabiltätssignal "grün" ist, wenn tatsächlich aber ein Störsignal (z.B. ein sinusförmiges Signal mit großer Amplitude) vorliegt.

Des Weiteren bleibt die Stabilitätsanzeige des erfindungsgemäßen Sensors auch bei hohen Schaltfrequenzen auf "grün", da alle Detektionszweige im Gleichtakt arbeiten.

In einer Weiterbildung der Erfindung haben die Filter weitgehend komplementäre Frequenzgänge. "Weitgehend komplementär" soll in diesem Zusammenhang heißen, dass die Frequenzbereiche der Filter, in denen diese die Störsignale maximal dämpfen können, sich nicht überlappen. Dann können nämlich die verschiedenen Störer, die Störsignale verursachen, optimal erkannt werden.

Bevorzugt weist jeder Detektionszweig ein Schieberegister auf, in das das jeweilige Vergleichsergebnis geschoben wird. Dabei sind vorteilhafterweise die Schieberegister gleich, insbesondere mit gleicher Tiefe p, ausgebildet. Das Objektfeststellungssignal Q wird beispielsweise dann geändert, wenn eine bestimmte Anzahl Bits aller Schieberegister ungleich Q sind. Das Stabilitätssignal wird auf 'low' gesetzt, wenn innerhalb einer gemeinsamen Spalte der Schieberegister nicht alle Bits identisch sind.

Das Stabilitätssignal kann ein binäres Signal oder auch ein Signal, das neben 'low' und 'high' auch Zwischenwerte annehmen kann, sein. Auf diese Weise enthält das Stabilitätssignal nicht nur eine binäre Information, sondern zusätzlich eine Information über den Grad der Stabilität des Sensors. Vorteilhafterweise ist dabei das Stabilitätssignal abhängig von der Anzahl derjenigen Spalten der Schieberegister, in denen die Bits nicht identisch sind.

In Weiterbildung der Erfindung sind mehr als zwei Detektionszweige mit jeweils einem Filter, einem Komparator und einem Schieberegister vorgesehen. Damit können weitere Frequenzbereiche anderer Störer erfasst werden.

Bevorzugt wird die Erfindung bei einem optoelektronischen Sensor eingesetzt, der einen Sendelicht ausstrahlenden Sender und einen Empfangslicht empfangenden Empfänger aufweist. Die vom Empfänger empfangene Messgröße ist hierbei die Intensität des am Objekt reflektierten Sendelichts.

Vorteilhafterweise wird das Stabilitätssignal durch eine optische Anzeige, insbesondere eine grüne LED, angezeigt.

Die Aufgabe wird auch gelöst durch ein Verfahren zur Bereitstellung eines Stabilitätssignals mit den Schritten:
- Erfassen einer Messgröße mit einem Empfänger und Bereitstellen eines Empfangssignals in Abhängigkeit der von einem zu detektierenden Objekt beeinflussten Messgröße,
- Filtern des Empfangssignals in einem ersten Detektionszweig,
- Vergleichen des gefilterten Empfangssignals mit einem Schwellwert eines Komparators in dem ersten Detektionszweig,
- Erzeugen eines Objektfeststellungssignals,
- Zuführen des Empfangssignals zu mindestens einem zweiten parallelen Detektionszweig und
- Filtern des Empfangssignals in dem zweiten Detektionszweig und Vergleichen gegen einen zweiten Schwellwert,
- Erzeugen eines Stabilitätssignals in Abhängigkeit aller Vergleichsergebnisse.

Dabei wird vorteilhafterweise in jedem Detektionszweig das Vergleichsergebnis einem Schieberegister zugeführt und das Stabilitätssignal auf einen Wert gesetzt, der abhängig ist von der Anzahl derjenigen Spalten der Schieberegister, in denen die Bits nicht identisch sind.

Die Vorteile eines solchen Verfahrens wurden bei der obigen Beschreibung des entsprechenden Sensors bereits erwähnt.

Im Folgenden wird die Erfindung anhand eines Ausführungsbeispiels unter Bezugnahme auf die Zeichnung im Einzelnen erläutert. In der Zeichnung zeigen:
- Fig. 1: ein stark schematisches Blockschaltbild eines erfindungsgemäßen Sensors;
- Fig.2: schematische Darstellungen von Frequenzgängen der Filter der verschiedenen Detektionszweige;
- Fig. 3: schematische Darstellungen des Objektfeststellungsignals und des Stabilitätssignals in Abhängigkeit der empfangenen Messgröße;
- Fig. 4: eine Darstellung wie Fig. 1 eines Sensors nach dem Stand der Technik;
- Fig. 5: eine Darstellung wie Fig. 3 von Signalen eines Sensors nach dem Stand der Technik.

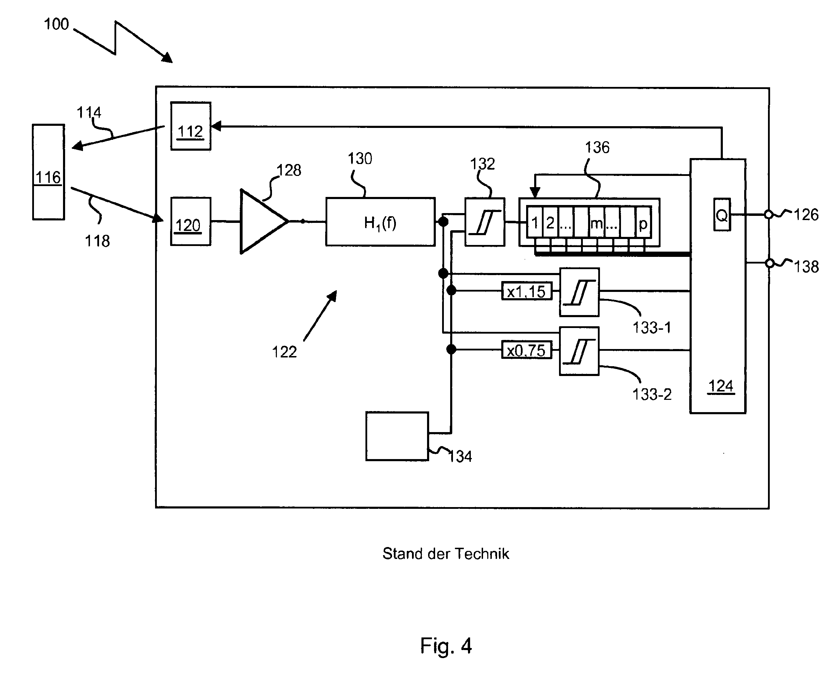

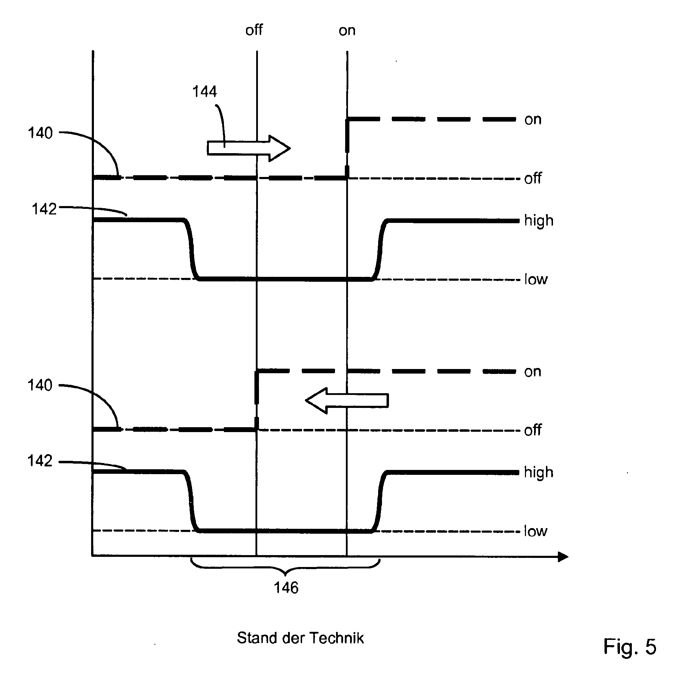

Zum besseren Verständnis soll zunächst anhand der Fig. 4 und 5 ein Sensor nach dem Stand der Technik und dessen Funktion einer Stabilitätsanzeige erläutert werden.

Das Ausführungsbeispiel, sowohl das des Standes der Technik als auch das der Erfindung, ist ein optoelektronischer Sensor. Prinzipiell ist die Erfindung aber auch in anderen Arten von Sensoren verwirklichbar, wie beispielsweise induktiven oder kapazitiven Sensoren. Dann wäre die vom Empfänger erfassbare Messgröße nicht eine Lichtintensität, wie bei optischen Sensoren, sondern eine magnetische Induktivität oder eine Kapazität.

In Fig. 4 ist ein optischer Sensor 100 nach dem Stand der Technik dargestellt, der einen Lichtsender 112 aufweist, dessen Sendelicht 114 von einem zu detektierenden Objekt 116 reflektiert wird und als Empfangslicht 118 von einem Empfänger 120 empfangen wird. Der Empfänger 120 wandelt die empfangene Lichtintensität in ein Empfangssignal um. Das Empfangssignal wird in einem noch näher zu beschreibenden Detektionszweig 122 vorverarbeitet und schließlich einer Auswerteeinheit 124 zugeführt, die in Abhängigkeit des Empfangssignals, also in Abhängigkeit des Vorhandenseins des Objektes 116, an einem Ausgang 126 ein Objektfeststellungssignal 140 ausgibt. Der Lichtsender 112 wird über die Auswerteeinheit 124 angesteuert, um beispielsweise bei gepulstem Licht eine Synchronisation zwischen Sende- und Empfangslicht zu haben.

In dem Detektionszweig 122 wird das Empfangssignal in einem Vorverstärker 128 verstärkt und das verstärkte Signal in einem Filter 130 gefiltert. Das Filter 130 dient zur Eliminierung von Störsignalen auf dem Empfangssignal, die beispielsweise von elektrischen Störern, wie Energiesparlampen, Handys oder dergleichen, herrühren. Das so gefilterte Ausgangssignal des Filters 130 wird in einem Komparator 132 mit einem Schwellwert verglichen, der von einem Detektionsschwellwertgeber 134 bereitgestellt wird. Das binäre Vergleichsergebnis wird dann in ein Schieberegister 136 geschoben, das eine Tiefe p hat. Das Schieberegister 136 wird von der Auswerteeinheit 124 ausgelesen, die auch den Messtakt vorgibt.

Die Auswerteeinheit 124 ist beispielsweise derart programmiert, dass sie an dem Ausgang 126 das Objektfeststellungssignal 140 ändert (Wechsel vom Ein-Zustand in den Aus-Zustand oder umgekehrt), wenn eine bestimmte Anzahl m der p Bits des Schieberegisters 136 sich auf den gleichen Wert geändert haben. Also wenn beispielsweise das Objektfeststellungssignal im "Ein"-Zustand war, was z.B. einem jeweiligen Bit-Wert von "1" entspricht und nun m aufeinanderfolgende Bits den Wert "0" annehmen.

Des Weiteren weist die Auswerteeinheit 124 einen zweiten Ausgang 138 zur Ausgabe eines Stabilitätssignals 142 auf. Dieser Ausgang 138 ist als optische Anzeige für das Stabilitätssignal, nämlich als grüne Anzeige-LED ausgebildet. Das Stabilitätssignal 142 wird dabei auf folgende Art erzeugt. Das Ausgangssignal des Filters 130 wird zwei weiteren Komparatoren 133-1 und 133-2 zugeführt. Weiter wird dem ersten Komparator 133-1 der mit einem Faktor 1,15 multiplizierte Detektionsschwellwert des Detektionschwellwertgebers 134 zugeführt, und dieser gibt sein Ergebnis an die Auswerteeinheit 124. Des Weiteren wird dem zweiten Komparator 133-1 der mit einem Faktor 0,75 multiplizierte Detektionsschwellwert zugeführt. Der zweite Komparator 133-2 gibt sein Ergebnis ebenfalls an die Auswerteeinheit 124. Die Komparatorergebnisse werden in der Auswerteeinheit 124 derart ausgewertet, dass je nach Höhe des Ausgangssignals des Filters 130 die Stabilitätsanzeige 138 leuchtet oder nicht. Ist das Ausgangssignal des Filters 130 kleiner als das 0,75-fache oder größer als das 1,15-fache des Detektionschwellwertes leuchtet die Stabilitätsanzeige, ansonsten ist sie erloschen, wie eingangs bereits erwähnt.

In Fig. 5 sind die qualitativen Verläufe des Objektfeststellungsignals 140 und des Stabilitätssignals 142 dargestellt, wobei in der oberen Hälfte des Bildes der Verlauf dargestellt ist, wenn das Objektfeststellungssignal 140 von einem Off-Zustand (kein Objekt) in einen On-Zustand (vorhandenes Objekt) wechselt, also das Empfangssignal (die Messgröße) von kleinen Werten kommend größer wird, wie dies durch den Pfeil 144 angedeutet sein soll. In der unteren Hälfte des Bildes ist der umgekehrte Fall dargestellt, also ein Wechsel vom On- in den Off-Zustand. Die entsprechenden Ein- und Aus-Schaltpunkte liegen etwas getrennt voneinander, um eine Hysterese zu bilden, um ein Hin- und Her-Schalten des Sensors im Bereich des Schaltpunkts zu vermeiden.

Die oben beschriebene Funktionsweise zur Erzeugung des Stabilitätssignals 142 führt zu dem in Fig. 5 gezeigten qualitativen Verlauf. Dabei fällt das Stabilitätssignal 142 relativ weit entfernt von der Schaltschwelle und an durch die Faktoren "1,15" und "0,75" festgelegten Positionen bereits in den "low" Status, so dass innerhalb eines relativ großen Bereichs 146 um die Schaltpunkte herum das Stabilitätssignal "low" ist, in dem der Sensor somit nicht stabil arbeitet. Oder anders ausgedrückt ist der restliche Bereich (Stabilitätssignal "high"), in dem der Sensor stabil arbeiten kann, entsprechend verringert.

Hier schafft die Erfindung eine erhebliche Verbesserung, wodurch der instabile Bereich 146 erheblich verkleinert werden kann und eng begrenzt ist auf die Schaltpunkte und darüber hinaus jedes Störsignal sicher erkannt wird.

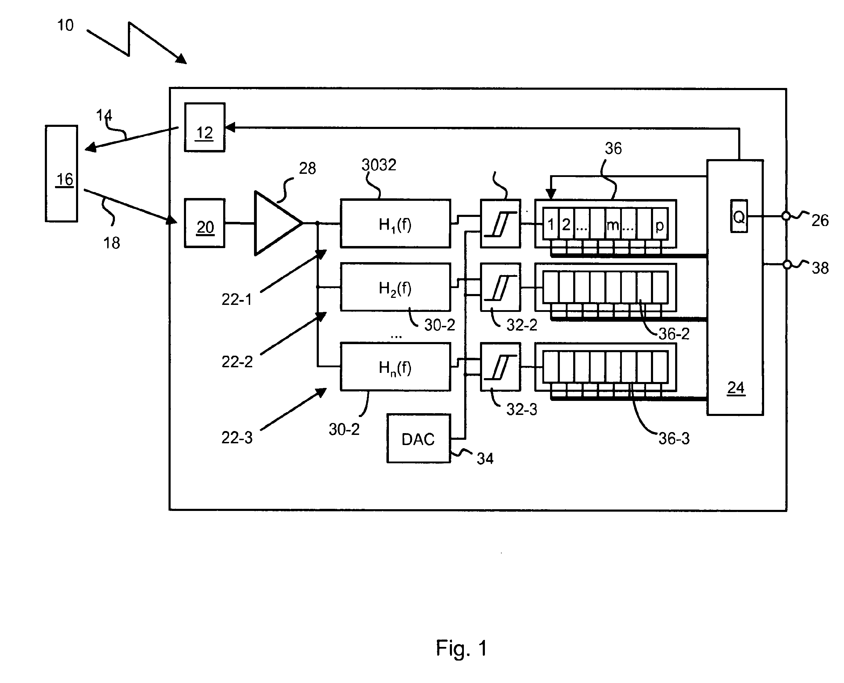

Dazu ist nach der Erfindung, wie auch in Fig. 1 dargestellt, neben dem ersten Detektionszweig 22-1, der ähnlich wie derjenige nach dem Stand der Technik nach Fig. 4 aufgebaut ist, wenigstens ein zweiter Detektionszweig 22-2 vorgesehen. Um die Ähnlichkeit des ersten Detektionszweiges 22-1 mit dem Detektionszweig 122 nach dem Stand der Technik darzustellen, sind ähnliche Bezugsziffern gewählt und wurden lediglich um 100 erniedrigt. Diese Nomenklatur gilt auch für Auswerteeinheit 24, Lichtsender 12, Sendelicht 14, Objekt 16, Empfangslicht 18, Empfänger 20, ersten Ausgang 26 für das Objektfeststellungssignal 40 und für den zweiten Ausgang 38 für das Stabilitätssignal 42.

Wie bereits zum Stand der Technik beschrieben, weist der nun erfindungsgemäße Sensor 10 den Lichtsender 12 auf, dessen Sendelicht 14 von dem zu detektierenden Objekt 16 reflektiert wird und als Empfangslicht 18 von dem Empfänger 20 empfangen wird. Der Empfänger 20 wandelt die empfangene Lichtintensität in ein Empfangssignal um. Das Empfangssignal wird in dem Vorverstärker 28 verstärkt und in dem wie im Stand der Technik ausgebildeten ersten Detektionszweig 22-1 und parallel dazu auch im zweiten Detektionszweig 22-2 vorverarbeitet. Der Lichtsender 12 wird über die Auswerteeinheit 24 angesteuert, zur Vorgabe des Messtaktes und Synchronisation zwischen Sende-und Empfangslicht.

Der zweite Detektionszweig 22-2 ist analog wie der erste Detektionszweig 22-1 aufgebaut und weist ein zweites Filter 30-2 und einen dem Filter 30-2 nachgeordneten Komparator 32-2 sowie ein Schieberegister 36-2 auf.

In gleicher Weise können parallel dazu weitere Detektionszweige vorgesehen sein. In dem Ausführungsbeispiel nach Fig. 1 ist noch ein dritter Detektionszweig 22-3 gezeigt. Für die folgende Funktionsbeschreibung sei angenommen, dass drei Detektionszweige 22-1, 22-2 und 22-3 vorhanden sind.

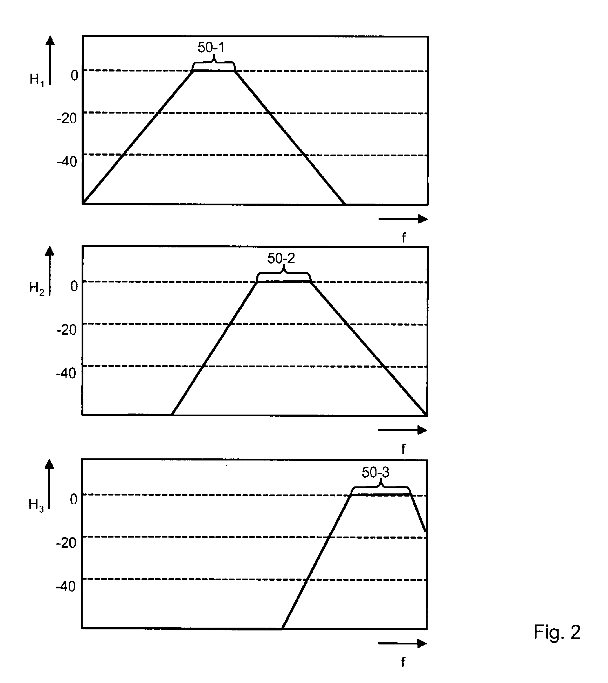

Diese Detektionszweige sind parallel angeordnet, das heißt das im Verstärker 28 verstärkte Empfangssignal wird parallel jedem Filter 30, 30-2, 30-3 zugeführt. Die Filter haben unterschiedliche Frequenzgänge H,(f), die schematisch in Fig. 2 dargestellt sind. Bevorzugt sind die Frequenzgänge H,(f) weitgehend komplementär, was bedeuten soll, dass diejenigen Frequenzbereiche 50-1, 50-2, 50-3, in denen die jeweiligen Filter optimal dämpfen, sich nicht überlappen. Auf diese Weise werden die verschiedenen Störsignale unterschiedlich gefiltert. In einer optimalen Auslegung des Sensors 10 ist für jede Art Störsignal ein "passendes" Filter vorhanden.

Die jeweiligen Ausgangssignale der Filter werden in den nachgeordneten Komparatoren 32, 32-2, 32-3 gegen einen Schwellwert, der von einem Schwellwertgeber 34, z.B. einem Digital-Analog-Konverter, bereitgestellt wird, verglichen. Die Vergleichsergebnisse werden in die jeweiligen nachgeordneten Schieberegister 36, 36-2, 36-3 geschoben. In dem in Fig. 1 dargestellten Ausführungsbeispiel ist nur ein Schwellwertgeber 34 zur Bereitstellung eines Schwellwertes vorgesehen. Daher sind in diesem Ausführungsbeispiel der erste Schwellwert im ersten Detektionszweig, der zweite Schwellwert im zweiten Detektionszweig und der dritte Schwellwert im dritten Detektionszweig gleich. Alternativ könnte auch in jedem Detektionszweig ein anderer Schwellwert vorgegeben werden, wobei die Schwellwerte sich aber höchstens um einen Betrag, der klein gegenüber der Hysterese (Differenz zwischen Ein-und Ausschaltpunkt) ist, unterscheiden sollten.

Die Schieberegister sind bevorzugt mit gleicher Tiefe p ausgebildet.

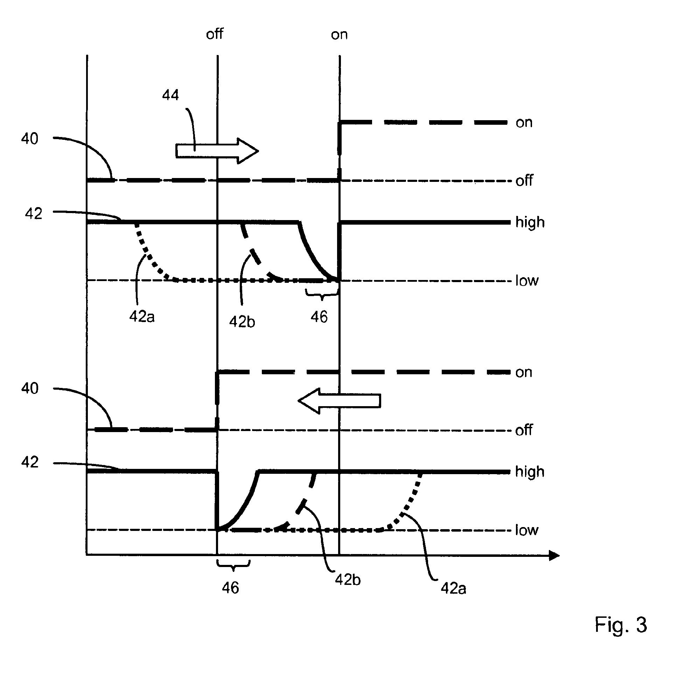

Fig. 3 zeigt den qualitativen Verlauf von Objektfeststellungssignal 40 und Stabilitätssignal 42, analog zu Fig. 5. Das Objektfeststellungssignal 40 wird dann geändert (Wechsel in den Ein-Zustand "on" oder Aus-Zustand "off"), wenn in allen Schieberegistern beispielsweise jeweils eine bestimmte Anzahl m der jeweils insgesamt p Bits den gleichen Wert haben. Dabei müssen auch immer dieselben Bits, also die Bits gleicher Spalten der Schieberegister diesen Wert haben, also beispielsweise immer die ersten m Bits. Vorteilhafterweise ist m<p, wobei sich Werte von m=3 und p=10 als sinnvoll herausgestellt haben.

Das Stabilitätssignal 42 wird beispielsweise auf den Wert "low" gesetzt, wenn von allen p Bits in allen drei Schieberegistern innerhalb einer "Spalte" nicht alle drei Bits identisch sind. Oder anders ausgedrückt, wenn nicht in allen Schieberegistern derselbe Inhalt vorliegt. Im Ergebnis wird somit das Stabilitätssignal 42 in Abhängigkeit aller Vergleichsergebnisse aus den verschiedenen Detektionszweigen erzeugt.

In dieser Ausgestaltung ist das Stabilitätssignal 42 ein binäres Signal, das entweder den Wert "low" oder den Wert "high" einnehmen kann. Wenn der Ausgang 38 als grüne LED ausgebildet ist, heißt dies, dass die LED entweder leuchtet (Stabilitätssignal "high") oder erloschen ist (Stabilitätssignal "low"). Es wäre aber auch denkbar, dass das Stabilitätssignal Zwischenwerte annehmen könnte und zwar abhängig von der Anzahl der Spalten der drei Schieberegister, in denen die Bits nicht identisch sind. Ist die Anzahl hoch, dann ist die Stabilität niedrig, ist die Anzahl niedrig heißt dieses, dass hohe Übereinstimmung zwischen den Schieberegistern besteht und die Stabilität ist entsprechend hoch. Diese Zwischenwerte könnten durch unterschiedliche Helligkeit der LED oder Blinksignale angezeigt werden. In Fig. 3, die den qualitativen Verlauf des Objektfeststellungssignals 40 und des Stabilitätssignals 42 beim Wechsel des Objektfeststellungssignals vom "off" in den "on"-Zustand und umgekehrt wiedergibt, ist deshalb auch kein Sprung des Stabilitätssignals von "high" nach "low" dargestellt, sondern ein Abfallen mit einer Flanke. Allerdings springt das Stabilitätssignal beim Umschalten des Objektfeststellungssignals von "off" nach "on" bzw. von "on" nach "off" direkt in den "high" Zustand zurück, denn dann ist das nächste Rück-Umschalten des Objektfeststellungssignals nach "off" bzw. "on" aufgrund der Hysterese wieder weit entfernt.

Die erfindungsgemäße Ausführung zur Erzeugung des Stabilitätssignals 42 führt zu diesem erheblich verbesserten Verlauf. Das Stabilitätssignal fällt in der Regel erst unmittelbar kurz vor Umschalten des Objektfeststellungsignals in den "low"-Status und springt zum Zeitpunkt des Umschaltens sofort wieder in den "high"-Status. Das bedeutet für die Stabilitätsanzeige, dass diese lediglich nur kurz vor dem Umschalten erlischt. Somit ist der Bereich, in dem die Stabilitätsanzeige eine Instabilität signalisiert, erheblich reduziert gegenüber dem Stand der Technik und nur auf den unvermeidbaren Bereich direkt am Umschaltpunkt begrenzt.

Dabei ist die Position des "Umschaltens" des Stabilitätssignals auf der Abszisse abhängig von dem Störsignal. Handelt es sich beispielsweise um ein relativ kleines Rauschen, dann liegt der "Umschaltpunkt" für das Stabilitätssignal 42 sehr nahe am Umschaltpunkt des Objektfeststellungssignals 40. Handelt es sich aber um ein sinusförmiges Störsignal mit großer Amplitude, wie dies eingangs bezüglich des Standes der Technik angesprochen wurde, dann können die "Umschaltpunkte" für das Stabilitätssignal entsprechend weit entfernt von den Umschaltpunkten des Objektfeststellungssignals liegen, wie dies in Fig. 3 beispielsweise anhand der punktierten Linien 42a dargestellt sein soll. In Fig. 3 sind noch weitere "Umschaltpunkte" des Stabilitätssignals durch gestrichelte Linien 42b dargestellt, die einen Verlauf andeuten, der von einem Störsignal herrührt, das zwar größer als das Rauschen ist, aber kleiner als die angesprochene sinusförmige Störung mit großer Amplitude.

Wesentlich ist, dass das Stabilitätssignal die tatsächlichen Verhältnisse wiedergibt und dann und nur dann, wenn ein Störsignal vorliegt, das Stabilitätssignal auf "low" gesetzt ist und dann und nur dann, wenn kein Störsignal vorliegt, das Stabilitätssignal auf "high" gesetzt ist.

## Patentansprüche

1. Sensor mit einem eine Messgröße (18) erfassenden Empfänger (20), der in Abhängigkeit der von einem zu detektierenden Objekt (16) beeinflussten Messgröße (18) ein Empfangssignal bereitstellt und mit einer Auswerteeinheit (24) zur Bereitstellung eines Objektfeststellungsignals (40) in Abhängigkeit des Empfangssignals, wobei ein erster Detektionszweig (22-1) ein Filter (30) aufweist, dem das Empfangssignal zugeführt wird und dessen Ausgangssignal mit einem ersten Komparator (32) gegen einen ersten Schwellwert verglichen wird und damit der Komparator (32) ein erstes Vergleichsergebnis bereitstellt, **dadurch gekennzeichnet, dass** mindestens ein zweiter Detektionszweig (22-2) parallel zum ersten vorgesehen ist, in dem ein zweiter Filter (30-2) mit anderem Frequenzgang (H₂(f)) angeordnet ist, dessen Ausgangssignal mit einem zweiten Komparator (32-2) gegen einen zweiten Schwellwert verglichen wird und der zweite Komparator (32-2) ein zweites Vergleichsergebnis bereitstellt und in Abhängigkeit aller Vergleichsergebnisse ein Stabilitätssignal (42) des sensors erzeugbar ist.

2. Sensor nach Anspruch 1, **dadurch gekennzeichnet, dass** die Filter (30, 30-2) weitgehend komplementäre Frequenzgänge (Hᵢ(f)) haben.

3. Sensor nach einem der vorhergehenden Ansprüche, **dadurch gekennzeichnet, dass** jeder Detektionszweig (22-1, 22-2, 22-3) ein Schieberegister (36, 36-2, 36-3) aufweist, in das das jeweilige Vergleichsergebnis geschoben wird.

4. Sensor nach Anspruch 3, **dadurch gekennzeichnet, dass** die Schieberegister (36, 36-2, 36-3) gleich, insbesondere mit gleicher Tiefe (p), ausgebildet sind.

5. Sensor nach einem der vorhergehenden Ansprüche, **dadurch gekennzeichnet, dass** das Stabilitätssignal (42) ein binäres Signal ist.

6. Sensor nach einem der vorhergehenden Ansprüche 1 bis 4, **dadurch gekennzeichnet, dass** das Stabilitätssignal (42) 'low' oder 'high' oder Zwischenwerte annehmen kann.

7. Sensor nach Anspruch 6, **dadurch gekennzeichnet, dass** das Stabilitätssignal (42) abhängig ist von der Anzahl derjenigen Spalten der Schieberegister (36, 36-2, 36-3), in denen die Bits nicht identisch sind.

8. Sensor nach einem der vorhergehenden Ansprüche, **dadurch gekennzeichnet, dass** mehr als zwei Detektionszweige (22-1, 22-2, 22-3) mit jeweils einem Filter, einem Komparator und einem Schieberegister vorgesehen sind.

9. Sensor nach einem der vorhergehenden Ansprüche, **dadurch gekennzeichnet, dass** dieser als optischer Sensor (10) mit einem Sendelicht (14) ausstrahlenden Sender (12) und einem Empfangslicht (18) empfangenden Empfänger (20) ausgebildet ist.

10. Sensor nach einem der vorhergehenden Ansprüche, **gekennzeichnet durch** eine optische Anzeige für das Stabilitätssignal, insbesondere eine grüne LED.

11. Verfahren zur Bereitstellung eines Stabilitätssignals eines Sensors mit den Verfahrensschritten:
- Erfassen einer Messgröße mit einem Empfänger und Bereitstellen eines Empfangssignals in Abhängigkeit der von einem zu detektierenden Objekt beeinflussten Messgröße,
- Filtern des Empfangssignals in einem ersten Detektionszweig,
- Erzeugen eines ersten Vergleichsergebnisses durch Vergleichen des gefilterten Empfangssignals mit einem Schwellwert eines Komparators in dem ersten Detektionszweig,
- Erzeugen eines Objektfeststellungssignals,
**dadurch gekennzeichnet, dass**
- das Empfangssignal mindestens einem zweiten Detektionszweig parallel zugeführt wird
- und in dem zweiten Detektionszweig ebenfalls gefiltert wird und durch Vergleichen gegen einen zweiten Schwellwert ein zweites Vergleichsergebnis erzeugt wird und
- in Abhängigkeit aller Vergleichsergebnisse ein Stabilitätssignal des Sensors erzeugt wird.

12. Verfahren nach Anspruch 11, **dadurch gekennzeichnet, dass** in jedem Detektionszweig das Vergleichsergebnis einem Schieberegister zugeführt wird und das Stabilitätssignal auf einen Wert gesetzt wird, der abhängig ist von der Anzahl derjenigen Spalten der Schieberegister, in denen die Bits nicht identisch sind.

## Claims

1. Sensor with a receiver (20) which detects a measuring variable (18), the receiver provides a receiving signal as a function of the measured variable influenced by an object (16) to be detected and with an evaluation unit (24) for providing an object detection signal (40) as a function of the received signal, a first detection branch (22-1) comprises a filter (30) to which the received signal is fed and whose output signal is compared with a first comparator (32) against a first threshold and thus the comparator (32) provides a first comparison result, **characterized in that** at least a second detection branch (22-2) is provided parallel to the first one, in which a second filter (30-2) is arranged with a different frequency response (H₂(f)), whose output signal is compared with a second comparator (32-2) against a second threshold and the second comparator (32-2) provides a second comparison result and a stability signal (42) of the sensor is generated as a function of all comparison results.

2. Sensor according to claim 1, **characterized in that** the filters (30, 30-2) have largely complementary frequency responses (Hᵢ(f)).

3. Sensor according to any of the preceding claims, **characterized in that** each detection branch (22-1, 22-2, 22-3) comprises a shift register (36, 36-2, 36-3) in which the respective comparison result is pushed.

4. Sensor according to claim 3, **characterized in that** the shift registers (36, 36-2, 36-3) are designed equally, especially with the same depth (p).

5. Sensor according to any of the preceding claims, **characterized in that** the stability signal (42) is a binary signal.

6. Sensor according to any of the preceding claims 1 to 4, **characterized in that** the stability signal (42) can be 'low' or 'high' or can have intermediate states.

7. Sensor according to claim 6, **characterized in that** the stability signal (42) depends on the number of those columns of the shift register (36, 36-2, 36-3) in which the bits are not identical.

8. Sensor according to any of the preceding claims, **characterized in that** more than two detection branches (22-1, 22-2, 22-3) are each provided with a filter, a comparator and a shift register.

9. Sensor according to any of the preceding claims, **characterized in that** this sensor is an optical sensor (10) with a transmitter (12) radiating transmitted light (14) and a receiver (20) receiving light (18).

10. Sensor according to any of the preceding claims, **characterized by** an optical display for the stability of signal, particularly a green LED.

11. Method for providing a stability signal of a sensor comprising the steps:
- sensing a measuring variable with a receiver and providing a receiving signal as a function of a measured variable influenced by an object to be detected,
- filtering the received signal in a first detection branch,
- generating a first comparison result by comparing the filtered received signal with a threshold of a comparator in a first detection branch,
- generating an object detection signal,
**characterized in that**
- the received signal is fed in parallel to at least a second detection branch,
- and is also filtered in the second detection branch and a second comparison result is generated by comparing against a second threshold and
- a stability signal of the sensor is generated as a function of all comparison results.

12. The method of claim 11, **characterized in that** in each detection branch the comparison result is fed into a shift register and the stability signal is set to a value that depends on the number of those columns of the shift registers in which the bits are not identical.

## Revendications

1. Capteur avec un récepteur (20) qui détecte une variable de mesure (18), le récepteur fournit un signal reçu en fonction de la variable de mesure influencée par un objet (16) qui doit être détecté et avec une unité d'évaluation (24) pour fournir un signal de détection d'objet (40) en fonction du signal reçu, une première branche de détection (22-1) comprend un filtre (30) auquel le signal reçu est conduit et dont le signal de sortie du filtre est comparé avec un premier comparateur (32) contre un premier nombre de seuil et donc le comparateur (32) fournit un premier résultat de comparaison, **caractérisé en ce qu**'au moins une deuxième branche de détection (22-2) est prévue parallèlement à la première, dans laquelle un deuxième filtre (30-2) est disposé avec une réponse en fréquence différente (H₂(f)), dont le signal de sortie est comparé avec un deuxième comparateur (32-2) contre un deuxième nombre de seuil et le deuxième comparateur (32-2) fournit un deuxième résultat de comparaison et un signal de stabilité (42) du capteur est généré en fonction de tous les résultats des comparaisons.

2. Capteur selon la revendication 1, **caractérisé en ce que** les filtres (30, 30-2) ont des réponses en fréquence largement complémentaires (Hᵢ(f)).

3. Capteur selon l'une des revendications précédentes, **caractérisé en ce que** chaque branche de détection (22-1, 22-2, 22-3) comporte un registre à décalage (36, 36-2, 36-3) dans lequel le résultat de la comparaison respective est décalé.

4. Capteur selon la revendication 3, **caractérisé en ce que** les registres à décalage (36, 36-2, 36-3) sont formés égales, surtout avec la même profondeur (p).

5. Capteur selon l'une des revendications précédentes, **caractérisé en ce que** le signal de stabilité (42) est un signal binaire.

6. Capteur selon l'une des revendications précédentes 1 à 4, **caractérisé en ce que** le signal de stabilité (42) peut prendre 'low' ou 'high' ou des états intermédiaires.

7. Capteur selon la revendication 6, **caractérisé en ce que** le signal de stabilité (42) dépend du nombre des colonnes des registres à décalage (36, 36-2, 36-3) dans lesquelles les bits ne sont pas identiques.

8. Capteur selon l'une des revendications précédentes, **caractérisé en ce que** plus que deux branches de détection (22-1, 22-2, 22-3) sont fournies et chacune équipée d'un filtre, d'un comparateur et d'un registre à décalage.

9. Capteur selon l'une des revendications précédentes, **caractérisé en ce que** le capteur est un capteur optique (10) avec un émetteur (12) qui émet de la lumière transmise (14) et un récepteur (20) recevant la lumière reçue (18).

10. Capteur selon l'une des revendications précédentes, **caractérisé par** un affichage optique pour le signal de stabilité, en particulier une DEL verte.

11. Procédé pour fournir un signal de stabilité d'un capteur comprenant les étapes:
- détecter une variable de mesure avec un récepteur et fournir un signal de réception en fonction d'une variable de mesure influencée par un objet (16) qui doit être détecté,
- filtrage du signal reçu dans une première branche de détection,
- générer un premier résultat de comparaison par comparer le signal filtré avec un seuil d'un comparateur dans la première branche de détection,
- générer un signal de détection d'objets,
**caractérisé en ce que**
- le signal reçu est alimenté parallèlement à au moins une deuxième branche de détection,
- et est également filtré dans la deuxième branche de détection et un deuxième résultat de comparaison est généré en comparant le signal filtré contre un deuxième seuil,
- et un signal de stabilité de la capteur est généré en fonction de tous les résultats des comparaisons.

12. 11. Procédé selon la revendication 11, **caractérisé en ce que** dans chaque branche de détection le résultat de la comparaison est introduit dans un registre à décalage et le signal de la stabilité est fixé à une valeur qui dépend du nombre des colonnes des registres à décalage dans lesquelles les bits ne sont pas identiques.
